# FASCICULE DE BREVET EUROPEEN

(11) **EP 0 981 506 B1**
(45) Date de publication et mention de la délivrance du brevet: **04.04.2001**
(21) Numéro de dépôt: 98924417.3
(22) Date de dépôt: 11.05.1998
(51) Int. Cl.: C04B 24/00, C04B 28/02, E04F 15/12

(54) **BETON AUTONIVELANT ET PROCEDE DE FABRICATION D'UNE PIECE DE CONSTRUCTION**
SELBSTNIVELLERENDER BETON UND VERFAHREN ZUR HERSTELLUNG VON EINEM BAUTEIL
SELF-LEVELLING CONCRETE AND METHOD FOR MAKING A STRUCTURAL PART

(30) Priorité: 12.05.1997 FR 9705781; 06.08.1997 FR 9710094
(43) Date de publication de la demande: 01.03.2000
(73) Titulaire: LAFARGE, 75116 Paris (FR)
(72) Inventeur: LEVY, Christophe, F-78400 Chatou (FR); GARCIA, Rémy, F-77240 Cesson (FR)
(74) Mandataire: Phélip, Bruno
(86) Numéro de dépôt international: FR9800939
(87) Numéro de publication internationale: WO9851638

(56) Documents cités:
- EP-A- 0 612 702
- DE-U- 29 518 306
- FR-A- 2 696 736
- FR-A- 2 704 853
- FR-A- 2 722 526
- US-A- 5 403 394
- US-A- 5 614 017
- PATENT ABSTRACTS OF JAPAN vol. 095, no. 011, 26 décembre 1995 & JP 07 215750 A (NITTO CHEM IND CO LTD), 15 août 1995

## Description

La présente invention se rapporte à un béton autonivelant pouvant permettre de se passer totalement de vibration et de ragréage de surface, et à un procédé de fabrication d'une pièce de construction à partir d'un tel béton, les pièces fabriquées pouvant être aussi bien verticales qu'horizontales.

Les bétons autonivelants sont des bétons très fluides, qui se mettent en place et se serrent sous le seul effet de la gravité. sans qu'il soit nécessaire de mettre en oeuvre des vibrations. Les bétons autonivelants ont également pour propriété de conduire après durcissement à un produit final homogène, n'ayant pas subi de ségrégation. On trouvera un descriptif de tels bétons dans la synthèse bibliographique de Thierry SEDRAN parue dans Bull.- Labo. P. et Ch., 196, Réf. 3889, Mars-Avril 1995. On trouvera également un exposé sur ces bétons dans l'article de S. NAGATAKI, « Concrete Technology in Japan » (Chapitre 3), paru dans Concrete Under Severe Conditions: Environment and Loading (Volume 1), edited by K. SAKAI, N. BANTHIA and O. E. GJORV, 1995.

Les bétons autonivelants ont notamment pour avantages de produire des matériaux ayant une qualité moins dépendante du savoir-faire des ouvriers et du contrôle-qualité et un meilleur enrobage des aciers, de réduire les durées de mise en oeuvre et la main d'oeuvre nécessaire lors du coulage et d'améliorer le confort de travail.

Cependant, des défauts de surfaces apparaissent fréquemment, en particulier des zones de macrobullage.

La présente invention concerne un béton autonivelant permettant d'obtenir une qualité supérieure de parement, permettant d'éviter le macrobullage et ne nécessitant pas de ragréage ultérieur.

L'invention vise aussi un tel béton autonivelant qui offre un bon maintien de rhéologie, peut être bon marché, autorise l'emploi d'un ciment quelconque parmi une grande diversité de ciments et peut être fabriqué en centrale de béton prêt à l'emploi grâce à un maintien de rhéologie de quelques heures.

L'invention est également relative à un procédé de fabrication d'une pièce de construction à partir d'un béton autonivelant, qui soit souple à mettre en oeuvre, ne nécessite pas l'utilisation d'une grue, dégageant ainsi du temps pour augmenter la productivité du chantier et soit particulièrement adapté à un béton autonivelant ayant les qualités précédentes.

Dans tout ce qui suit, les gammes de valeurs mentionnées incluent les bornes inférieures et supérieures.

L'invention s'applique à un béton autonivelant de composition connue, contenant en poids, pour un mètre cube de béton :
- 350 à 600 kg/m³ environ de liant, dont 200 à 500 kg/m³ de ciment,
- 170 à 250kg/m³ environ d'eau,
- 0,5 à 4 kg/m³ environ d'agents et adjuvants divers (extraits secs), comprenant au moins un superplastifiant.
- le complément au mètre cube, en poids, de granulats et particules solides de granulométrie inférieure ou égale à 12 mm, préférentiellement inférieure ou égale à 8 mm.

Selon l'invention, le superplastifiant est un composé organique hydrosoluble ou hydrodispersable, qui comporte au moins un groupement amino-di(alkylènephosphonique), éventuellement salifié, et au moins une chaîne polyoxyalkylée. Plus précisément, le superplastifiant est un composé (I) ou sel du composé (I), ce composé (I) répondant à la formule: 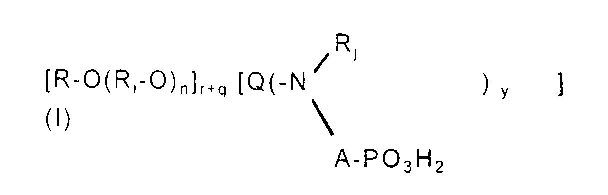 dans laquelle:
. R est un atome d'hydrogène ou un groupe hydrocarboné monovalent, saturé ou non, comportant de 1 à 18 atomes de carbone et éventuellement un ou plusieurs hétéroatomes: R étant de préférence un atome d'hydrogène ou un groupe hydrocarboné monovalent, saturé ou non. comportant de 1 à 4 atomes de carbone, 50% à 100% des R₁ sont l'éthylène, 0 à 50% des éventuels autres R₁ sont semblables ou différents entre eux et représentent un alkylène comme l'éthylène, le propylène, le butylène, l'amylène, l'octylène ou le cyclohexène, ou un arylène comme le styrène ou le méthylstyrène; les Rᵢ renfermant éventuellement un ou plusieurs hétéroatomes,
. Q est un groupe hydrocarboné comportant de 2 à 18 atomes de carbone et éventuellement un ou plusieurs hétéroatomes,
. A est un groupe alkylidène comportant de 1 à 3 atomes de carbone, A représentant de préférence le groupe méthylène,
. les Rⱼ sont semblables ou différents entre eux et peuvent être choisis parmi:
   * le groupe A-PO₃H₂, A ayant la signification précitée,
   * et le groupe 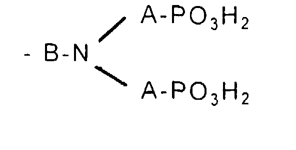
      - B désignant un groupement alkylène comportant de 2 à 8 atomes de carbone, B représentant de préférence l'éthylène ou le propylène, A ayant la signification précitée,
. « n » est un nombre compris entre 20 et 250,
. « r » est le nombre des groupes (R-O(Rᵢ-O)ₙ portés par l'ensemble des Rⱼ,
. « q » est le nombre des groupes [R-O(R₁-O)ₙ] portés par Q,
. la somme « r+q » est au plus égale à 3,
. « y » est un nombre entier égal à 1 ou 2,
. Q, N et les Rⱼ peuvent former ensemble un ou plusieurs cycles, ce ou ces cycles pouvant en outre contenir un ou plusieurs autres hétéro-atomes.

Les sels des composés (I) peuvent être stoechiométriques ou non, mixtes ou non, et sont constitués avec des métaux alcalins, des métaux alcalino-terreux, des amines ou des ammoniums quaternaires.

Les composés (I) se présentent sous une forme pouvant varier de la forme liquide à la forme solide, en passant par la forme cireuse.

Le complément au ciment pour constituer le liant est avantageusement constitué de laitier de haut-fourneau moulu, de cendres volantes. de filler, calcaire ou siliceux, ou d'autres éléments pouzzolaniques.

La catégorie des superplastifiants du béton autonivelant selon l'invention est connue en elle-même d'une manière générale comme fluidifiant pour suspensions aqueuses de particules minérales et pâtes de liant hydraulique, et est divulguée dans le document FR-A-2.696.736. De plus, un procédé de préparation d'un tel fluidifiant est décrit dans le document FR-A-2.689.895. Cependant, l'utilisation de ce fluidifiant comme superplastifiant dans un béton autonivelant selon l'invention est nouvelle. On renvoie notamment au document FR-A-2.696.736 pour une description détaillée de la catégorie des composés (I) et des sels de composés (I) utilisés comme superplastifiants dans le béton autonivelant selon l'invention.

Le béton autonivelant de l'invention a des résultats surprenants qui procurent des avantages déterminants:
a) il évite le macrobullage en laissant les bulles remonter en surface, et conduit à une surface très lisse et à une qualité supérieure de parements ne nécessitant pas de ragréage de surface ultérieur;
b) il ne présente quasiment aucune ségrégation ni phénomène de ressuage, ce qui affranchit de la nécessité de rajouter un agent viscosant et procure ainsi des économies et une plus grande facilité de mise en oeuvre;
c) le ciment contenu dans le béton autonivelant selon l'invention peut être choisi parmi une très grande diversité de ciments sans affecter sensiblement les qualités du béton;
d) le parement obtenu est clair ou devient rapidement clair (par exemple au bout d'une semaine) dans de très nombreux cas, même en présence d'une grande quantité de cendres volantes ou de ciment foncé, ce qui procure au parement une qualité esthétique supérieure;
e) le béton a un bon maintien de rhéologie, qui peut généralement atteindre au moins 3 heures.

Le béton autonivelant de l'invention peut permettre également une mise en place sans vibration, une quasi-absence de ressuage, une mise en oeuvre rapide, une bonne capacité de pompage et un très bon caractère de nivellement horizontal sans vibration. Le béton peut être préparé dans une centrale à béton classique sans modification de cette centrale à béton, et être livré prêt à l'emploi par camions malaxeurs sur le chantier. Le cas échéant, la fluidité du béton est ajustée par un ajout supplémentaire du superplastifiant sur le chantier. Ainsi, les dosages de chaque composant du béton peuvent être réguliers.

La fluidité du béton élimine les opérations traditionnelles d'étalement et de mise à niveau avec une règle ou un moyen équivalent, ainsi que l'opération de talochage pour les bétonnages horizontaux, sous réserve que les conditions normales de mise en oeuvre soient respectées par l'homme du métier. Pour obtenir une surface horizontale plane et lisse, il suffit de passer légèrement une barre de finition à la surface du produit frais. En effet, le béton est presque autolissant. En outre, le maintien de cette fluidité pendant une durée raisonnable, de l'ordre de 2 à 4 heures, et la bonne cinétique de prise et de durcissement du béton, permettent l'accès de personnes sur la pièce fabriquée dès le lendemain de la mise en place du béton.

Lors d'essais d'étalement (slump flow), ce béton peut rendre possible l'obtention d'une valeur d'affaissement supérieure à 70 cm après fluidification sur chantier, et notamment de façon préférée entre 73 cm et 77 cm. Une résistance moyenne à 28 jours au moins égale à une trentaine de Mpa peut aussi être obtenue.

Le béton, une fois durci, conduit à une pièce de construction présentant un bon aspect de surface, lisse et plan, sans nécessité d'un ponçage pour les pièces horizontales. Dans le cas des pièces verticales, cette surface a une texture de parement fin, qui peut répondre aux spécificités énoncées dans la référence DTU21 (Document Technique Unifié).

Pour les besoins du béton autonivelant de l'invention, le superplastifiant tel que défini précédemment présente avantageusement les caractéristiques suivantes, prises séparément ou en association selon toutes leurs combinaisons techniquement possibles:
- R est un atome d'hydrogène,
- R est un groupe hydrocarboné monovalent, saturé ou non, comportant de 1 à 4 atomes de carbone,
- les groupes Rᵢ sont choisis parmi l'éthylène et le propylène,
- Rᵢ est majoritairement l'éthylène, le nombre de motifs d'éthylène correspondant à Rᵢ étant suffisant pour conserver le caractère hydrosoluble ou hydrodispersable du composé (I),
- Q est un groupe hydrocarboné comportant de 2 à 12, et préférentiellement de 2 à 6 atomes de carbone, et représente préférentiellement l'éthylène et/ou le propylène, ceux-ci étant avantageusement présents à raison de 95% en moles, le complément étant constitué d'autres monomères, tels le cyclohexène ou le n-hexène.
- le groupe alkylidène A comporte de 1 à 3 atomes de carbone,
- A est le groupe méthylène,
- le groupe Rⱼ est le groupe -CH₂-PO₃H₂, éventuellement salifié, ou le groupe -C₂H₄N (CH₂-PO₃H₂)₂, éventuellement salifié, ou le groupe - C₃H₆N(CH₂PO₃H₂)₂ éventuellement salifié,
- les sels du composé (I) sont des sels de sodium, de calcium ou de diéthanolamine,
- «n » est compris entre 20 et 250, de préférence entre 30 et 150 et encore mieux entre 50 et 100,
- la somme « r +q » est inférieure à 3 et préférentiellement égale à 1,
- «y » est égal à 1.

Bien que cela ne soit pas nécessaire en général, le béton autonivelant de l'invention peut comprendre un ou plusieurs agents viscosants choisis par exemple parmi des silices ultrafines ou des composés organiques tels que des polysaccharides à haut poids moléculaire comme les amidons, la gomme Xanthane, la gomme Welan ou des dérivés cellulosiques, à raison de 0 à 1 kg/m³ environ (extrait sec) de la composition.

Néanmoins, un des intérêts du béton selon l'invention est d'éviter l'utilisation d'agents viscosants souvent chers et difficiles d'emploi.

Avantageusement, le composé (I) utilisé à titre de superplastifiant dans le béton autonivelant selon l'invention comprend une ou plusieurs des caractéristiques ci-après:
(i) au moins 50% des Rᵢ sont l'éthylène et les éventuels autres Rᵢ sont le propylène;
(ii) Rᵢ est choisi parmi les groupes, éventuellement salifiés. -CH₂-PO₃H₂, -C₂-H₄N(CH₂-PO₃H₂)₂ et - C₃H₆N(CH₂-PO₃H₂)₂.

De très bons résultats ont été obtenus avec un composé (I) diphosphoné dans lequel Rᵢ est l'éthylène, Rᵢ est -CH₂-PO₃H₂. « n » est compris entre 30 et 150 (bornes incluses), de préférence entre 50 et 100 (bornes incluses), la somme « r+q » est égale à 1 et « y » est égal à 1.

Un composé qui a donné de très bons résultats répond à la formule (Il): 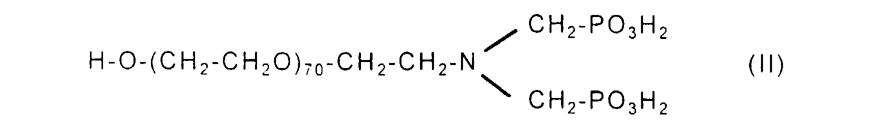 et ses sels.

Avantageusement, la quantité du superplastifiant (I) comportant au moins un groupement amino-di (alkylènephosphonique) et au moins une chaîne polyoxyalkylée, dans la composition autonivelante, est comprise entre 0,2 et 2% en poids en sec, rapporté au poids de ciment, de préférence entre 0,3 et 0,8% en poids en sec.

Conformément à une variante de réalisation du béton autonivelant selon l'invention, en plus du superplastifiant (I) répondant à la formule (I) précitée, on prévoit dans la composition au moins un superplastifiant (PCP), hydrosoluble ou hydrodispersable, de type acide polycarboxylique et renfermant des chaînes polyéthers.

Ces superplastifiants (PCP), qui sont à base de monomères vinyiiques carboxyliques, et éventuellement, de monomères sulfonés, sont bien connus et sont notamment décrits dans le brevet US-5.6 14.017 et le brevet EP-0.612.702.

De préférence, on fait varier le rapport en poids du superplastifiant (I) sur le superplastifiant (PCP) de 0,1 à 10.

La combinaison des superplastifiants (I) et (PCP) permet de préparer des bétons autonivelants à la fluidité souhaitée avec des teneurs en eau réduites. En outre, en faisant varier la proportion du superplastifiant (I) par rapport au superplastifiant (PCP), on peut moduler le maintien de la fluidité dans le temps des compositions de béton autonivelantes du ciment.

De préférence, le superplastifiant (PCP) prévu dans le béton autonivelant selon l'invention renferme des chaînes polyéthers de différentes longueurs. Avantageusement, le superplastifiant (PCP) prévu dans le béton autonivelant selon l'invention est tel que les chaînes polyéthers renferment, en moyenne, au moins 50% d'unités oxyéthylènes (pourcentage exprimé sur le total des motifs oxyalkylènes du superplastifiant PCP). De préférence encore, les autres motifs oxyalkylènes sont des motifs oxypropylènes.

Avantageusement, le béton autonivelant selon l'invention comprend au moins un agent antimousse. La nature chimique de l'agent antimousse n'est pas critique. De préférence, on choisit le tributylphosphate. La quantité d'agent antimousse est généralement comprise entre 0,01 et 0,3% en poids, rapporté au poids de ciment.

Avantageusement, le béton autonivelant selon l'invention comprend au moins un agent épaississant. Comme agent épaississant pouvant être utilisé dans le béton autonivelant faisant l'objet de la présente invention, on peut citer des composés minéraux tels que la sépiolite ou des silices ultrafines, ou des composés organiques, tels que des dérivés de la cellulose ou des polysaccharides de poids moléculaire élevé, comme des gommes de xanthane, ou des mélanges de deux ou plusieurs des agents épaississants précités. La quantité d'agent épaississant peut être comprise entre 0,005% et 0,05% en poids en sec rapporté au poids de ciment.

Lorsqu'un agent antimousse et, éventuellement, un agent épaississant sont prévus dans le béton autonivelant selon l'invention, on les introduit avantageusement simultanément avec le superplastifiant (I) dans cette composition, au moyen d'un prémélange uniforme et stable. De préférence, ce prémélange renferme essentiellement:
- de l'eau.
- au moins un agent antimousse non hydrosoluble ou faiblement hydrosoluble;
- au moins un superplastifiant (I) répondant à la formule (I) et, éventuellement, un autre superplastifiant (PCP), hydrosoluble ou hydrodispersable.
- au moins un composé organique (O) contenant:
   - au moins une fonction amine primaire, secondaire ou tertiaire, éventuellement partiellement ou totalement neutralisée par un acide de Brönsted, organique ou minéral; et
   - au moins une chaîne alkyle ou alkyl-aryle, linéaire ou ramifiée, saturée ou insaturée, comprenant au moins 8 atomes de carbone, et éventuellement des hétéroatomes, choisis parmi l'oxygène, le soufre ou l'azote;
- au moins un stabilisant minéral quand le pH dudit prémélange est supérieur à 7, tel que des argiles et les sépiolites;
- éventuellement, un acide ou une base pour ajuster le pH dudit mélange.

Dans ce prémélange:
- par « agent antimousse » non hydrosoluble ou faiblement hydrosoluble », on entend un agent antimousse faiblement ou non soluble dans les milieux aqueux à température ambiante (environ 20°C) et à la pression atmosphérique;
- par « mélange uniforme », on entend un mélange qui, laissé au repos, peut aller d'un mélange limpide (comme une microémulsion) à un mélange trouble (comme une émulsion huile dans eau). Parfois, une fine pellicule, généralement de la mousse, pourra être présente à la surface du mélange uniforme.

Le composé organique (O) est de préférence choisi parmi l'amine oléique, l'amine de coprah, l'amine de suif et les dérivés de ces amines, en particulier les dérivés de ces amines avec un motif d'oxyéthylène ou une chaîne contenant au maximum 8 motifs d'oxyéthylènes.

L'invention a également pour objet un procédé de fabrication d'une pièce de construction verticale par injection d'un béton autonivelant selon l'invention dans un coffrage. Dans ce procédé, on effectue un pompage du béton sous forme fluide au moyen d'au moins un tube plongeur ayant une extrémité d'injection à un niveau inférieur du coffrage.

Ce procédé, particulièrement bien adapté au béton autonivelant selon l'invention, permet un remplissage homogène du coffrage et affranchit de dispositifs encombrants et nécessitant des manipulations fastidieuses.

Préférentiellement, le tube plongeur a un diamètre compris entre 35 mm et 65 mm inclus, et avantageusement égal à 50 mm.

Dans un premier mode de mise en oeuvre préféré de ce procédé, on introduit le tube plongeur dans le coffrage par une ouverture supérieure du coffrage.

Dans un second mode de mise en oeuvre de ce procédé, le tube plongeur traverse le coffrage au niveau inférieur du coffrage. On facilite ainsi le travail des ouvriers, qui ont directement accès à des orifices d'introduction du tube, notamment pour des voiles très ferraillés ou des poteaux très fins.

L'invention a aussi pour objet un procédé de fabrication d'une pièce de construction horizontale par injection d'un béton autonivelant selon l'invention dans un coffrage plan ou sur un sol. Dans ce procédé, après injection, on presse régulièrement une barre de lissage à la surface du béton afin d'assurer une bonne planéité de la pièce.

On évite ainsi l'utilisation d'un produit de ragréage de sol.

D'autres avantages et buts de l'invention apparaîtront à la lecture d'exemples donnés ci-après dans un but illustratif et non limitatif, en référence aux figures annexées, sur lesquelles:
La Figure 1 représente un premier mode de coulage d'un béton autonivelant selon l'invention.
La Figure 2 représente un deuxième mode de coulage d'un béton autonivelant selon l'invention.
La Figure 3 représente un troisième mode de coulage d'un béton autonivelant selon l'invention.

Un béton autonivelant selon l'invention peut être coulé de plusieurs manières, le mode de mise en oeuvre étant avantageusement adapté à la pièce de fabrication à réaliser.

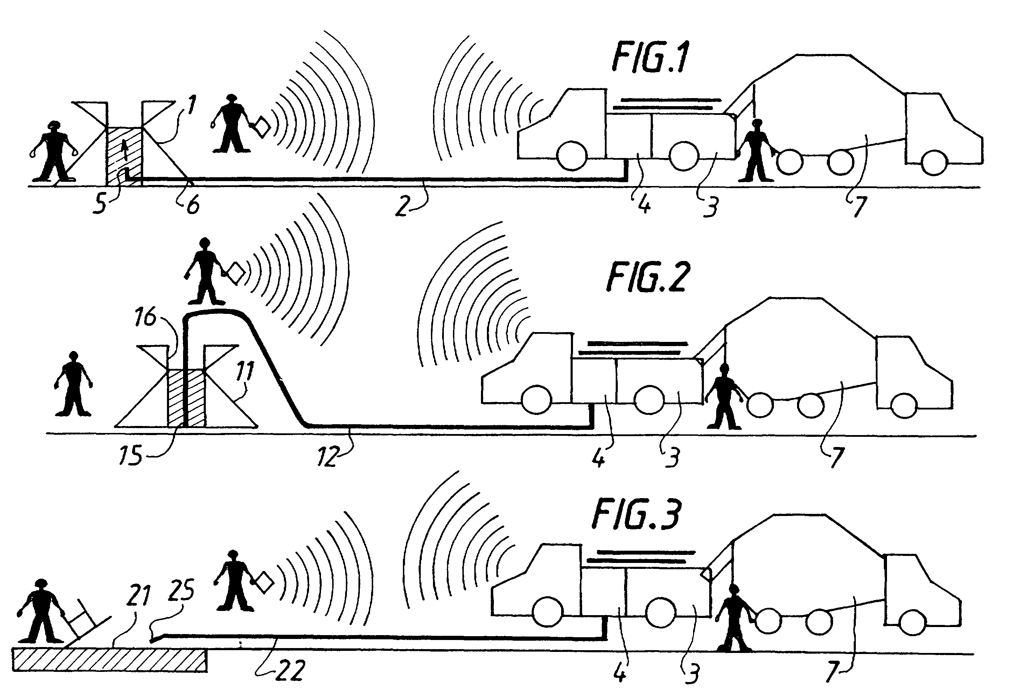

Dans un premier mode de mise en oeuvre, représenté sur la Figure 1, on injecte le béton dans une banche 1 au moyen d'un tube plongeur 2 qui traverse la banche 1 par une ouverture 6 située dans la partie inférieure de la banche 1, à proximité du sol ou du plan support. Ainsi, le tube 2 a une extrémité 5 disposée au fond de la banche 1. Ce mode de mise en oeuvre est particulièrement approprié à la fabrication de voiles, ou de poteaux, très ferraillés.

Dans un exemple de ce premier mode de mise en oeuvre. on verse le béton provenant par exemple d'une bétonnière mobile 7 dans une trémie 3 de 8 m³ de contenance et on l'injecte avec une pompe 4 dans la banche 1 à travers le tube plongeur 2, comme représenté sur la Figure 1. Le tube 2 est un tuyau flexible ayant un diamètre intérieur de 50 mm et une longueur de 60 m.

Dans un deuxième mode de mise en oeuvre, représenté sur la Figure 2, on injecte le béton dans une banche 11 au moyen d'un tube plongeur 12, qui est introduit dans la banche 11 par une ouverture supérieure 16 de la banche 11 et qui a une extrémité 15 qui descend jusqu'au fond de la banche 11. Ce mode de mise en oeuvre est particulièrement approprié à la fabrication de voiles.

A titre d'exemple, le tube 12 est un tuyau flexible ayant une partie horizontale de 50 m, une partie verticale de 15 m, et un diamètre intérieur de 65 mm. Dans une variante de mise en oeuvre, le tube 12 est un tuyau rigide, ayant à titre d'exemple un diamètre intérieur de 65 mm.

Dans une variante de mise en oeuvre, le tube 12 est un tuyau rigide, éventuellement ovalisé pour rendre son introduction plus facile dans des ferraillages denses.

Dans un troisième mode de mise en oeuvre, représenté sur la Figure 3, on injecte le béton dans un coffrage horizontal 21 ou directement dans un ferraillage au sol. On procède à cette injection au moyen d'un tube 22 horizontal débouchant juste au-dessus du coffrage 21 par une extrémité 25. On passe préférentiellement une barre de finition pour assurer une bonne planéité, évitant un ragréage de sol. Ce troisième mode de mise en oeuvre convient particulièrement à la fabrication de dalles ou de radiers.

Des exemples de compositions de bétons autonivelants selon l'invention vont être donnés ci-après.

### EXEMPLE 1

On réalise un béton autonivelant ayant la formule suivante:
- ciment CEM I: 270 kg/m³,
- eau: 218 l/m³
- cendres volantes: 210 kg/m³,
- granulats et particules volantes solides de granulométrie inférieure à 8 mm:1465 kg/m³,
- superplastifiant: 3,3 kg/m³, soit 0,99 kg/m³ en extrait sec,
- agent entraîneur d'air: 0,27 kg/m³.

Le superplastifiant utilisé est le composé de formule (Il).

Pour couler le béton, on a par exemple recours au premier mode de mise en oeuvre (Figure 1) qu'on utilise dans les conditions suivantes. La banche 1 ayant un volume de 2.5 m³, on injecte le béton au moyen du tube 2 qui consiste en un tuyau flexible long de 60 m et ayant un diamètre intérieur de 50 mm. La pompe 4 a un débit de 5 m³/h et applique une pression de 5 bars.

Avec cette mise en oeuvre, on mesure un étalement égal à 74 cm lors de l'essai d'étalement et un entraînement d'air de l'ordre de 3,5%. Le parement obtenu est d'une très bonne qualité et ne présente qu'une faible zone avec de très légères bulles en partie inférieure au-dessous de la zone d'introduction du tube 2.

### EXEMPLE 2

On réalise un béton autonivelant ayant la formule suivante:
- ciment CEM I: 270 kg/m³,
- eau: 230 l/m³,
- cendres: 210 kg/m³,
- granulats 0/1: 365 kg/m³,
- granulats 0/5: 365 kg/m³,
- granulats 3/8: 735 kg/m³,
- superplastifiant: 2,34 kg/m³, soit 0,7 kg/m³ en extrait sec,
- agent entraîneur d'air: 0,27 kg/m³.

Dans cet exemple, le superplastifiant est un composé de formule (Il).

On procède de manière similaire à l'exemple 1, mais avec un débit de pompe compris entre 15 m³/h et 25 m³/h. Lors de la mise en oeuvre, on rajoute un agent de démoulage pulvérisé. On effectue un démoulage pendant une durée de décoffrage de l'ordre d'une quinzaine d'heures.

L'étalement mesuré est alors de l'ordre de 75 cm lors de l'essai d'étalement.

### EXEMPLE 3

Dans cet exemple, on construit un voile de façade fortement ferraillé ayant 15 m de long, 2,5 m de hauteur et 16 cm d'épaisseur. Le voile comporte quatre fenêtres et une porte-fenêtre.

Le béton autonivellant a la formule suivante:
- ciment CEM I: 270 kg/m³,
- eau: 226 kg/m³
- cendres volantes: 210 kg/m³,
- sablon: 245 kg/m³,
- granulats 0/5: 500 kg/m³,
- granulats 3/8: 740 kg/m³,
- superplastifiant: 1,2% en poids du ciment.

Le superplastifiant utilisé est le composé de formule (Il).

Dans un premier mode de mise en oeuvre, on introduit dans une première étape 0,9% en poids du ciment à la centrale, dans l'eau de gâchage. Lors de l'arrivée sur chantier. un essai d'affaissement au cône d'Abrams donne les valeurs suivantes: 25 cm d'affaissement et 62 cm d'étalement. On rajoute ensuite du superplastifiant représentant 0,3% en poids du ciment et on mélange la composition obtenue par la rotation d'un malaxeur d'un camion-malaxeur. On fait ainsi tourner le malaxeur pendant environ 1 mn/m³, afin de bien homogénéiser le mélange. En réitérant l'essai d'affaissement, on mesure alors 77 cm d'étalement et une durée d'étalement à 60 cm inférieure à 1 s. On mesure également l'air occlus dans le béton, qui vaut 3% en poids du béton.

Dans un second mode de mise en oeuvre, au lieu d'effectuer une seconde fluidification sur chantier comme dans le premier mode de mise en oeuvre, on introduit l'ensemble du superplastifiant (1,2% du ciment) à la centrale. On procède alors avantageusement au transport du béton autonivelant dans le camion-malaxeur, soit en utilisant des bouchons sur ce camion-malaxeur, soit en le sous-chargeant.

Lors de la mise en oeuvre du béton, on rajoute par pulvérisation un agent de démoulage sous la forme d'une émulsion en phase aqueuse, par exemple du type commercialisé sous le nom Aquadem.

Préférentiellement, on utilise une pompe donnant un flux continu d'injection. Une telle pompe peut être par exemple constituée par une pompe à rotor comportant un tuyau ayant environ 100 cm de diamètre.

Le béton obtenu après durcissement comporte un parement de bonne qualité, tant en ce qui concerne le macrobullage que le microbullage ou la formation de radicelles.

### EXEMPLE 4

On réalise une pièce de construction similaire à celle de l'exemple 3 avec une mise en oeuvre similaire. Le béton autonivelant employé dans cet exemple a la formule suivante:
- ciment CEM I: 245 kg/m³,
- eau: 219 kg/m³
- cendres volantes: 230 kg/m³,
- sablon: 228 kg/m³,
- granulats 0/5: 500 kg/m³,
- granulats 3/8: 740 kg/m³,
- superplastifiant: 1,2% en poids du ciment.

Le superplastifiant utilisé est le composé de formule (Il).

On introduit le superplastifiant en deux étapes, en incorporant au mélange 0,8% en poids du ciment à la centrale, et 0,4% en poids du ciment à l'arrivée sur chantier. Avant l'ajout du superplastifiant sur chantier, on obtient lors d'un essai d'étalement des valeurs de 23 cm d'affaissement et de 50 cm d'étalement. Après ajout du superplastifiant, on obtient lors d'un essai d'affaissement, 72 cm d'étalement et une durée d'étalement à 60 cm d'environ 1 s.

La durée du transport du béton autonivelant atteint une heure, sans affecter la rhéologie du béton.

Le pompage et le démoulage sont effectués comme dans l'exemple 3.

Le béton durci obtenu a un parement d'une bonne qualité. en ne présentant notamment aucun macrobullage.

### EXEMPLE 5

La pièce construite et la mise en oeuvre dans cet exemple sont similaires à celles des exemples 3 et 4. Le béton autonivelant a la formule suivante:
- ciment CEM I: 270 kg/m³,
- eau: 218 kg/m³,
- cendres volantes: 210 kg/m³,
- sablon GSI: 245 kg/m³,
- granulats 0/5: 500 kg/m³,
- granulats 3/8: 740 kg/m³,
- superplastifiant: 1,3% en poids du ciment.

Le superplastifiant est le composé de formule (Il).

Comme dans les exemples 3 et 4, on obtient un parement de bonne qualité, ne nécessitant aucun ragréage de surface.

### EXEMPLE 6

Dans cet exemple, la pièce de construction réalisée et la mise en oeuvre du procédé de fabrication sont similaires à celles des exemples 3 à 5. Le béton autonivelant réalisé a la formule suivante:
- ciment CEM I: 270 kg/m³,
- eau: 230 kg/m³,
- cendres volantes: 210 kg/m³,
- sablon: 365 kg/m³,
- granulats 0/5: 365 kg/m³,
- granulats 3/8: 735 kg/m³,
- superplastifiant: 1,2% en poids du ciment,
- agent entraîneur d'air: 0,1% en poids du ciment.

Le superplastifiant est le composé de formule (Il).

On introduit le superplastifiant dans le mélange en deux étapes, en y incorporant 0,8% en poids du ciment à la centrale et 0,4% en poids du ciment sur chantier. L'essai d'affaissement à l'arrivée sur chantier avant ajout du superplastifiant donne des valeurs de 23 cm d'affaissement et de 51 cm d'étalement. On mesure également 4,6% d'air occlus dans le béton. Après ajout du superplastifiant, un essai d'affaissement donne 74 cm d'étalement et une durée d'étalement à 60 cm égale à 1 s. L'air occlus après ajout du superplastifiant représente 4,4% du béton.

Lors de la mise en oeuvre, l'agent démoulant rajouté est un produit d'origine entièrement végétale (huile), par exemple du type commercialisé sous le nom Bio 2, qui est pulvérisé.

On obtient un parement de bonne qualité, présentant notamment d'excellentes propriétés de bullage.

Dans les exemples 3 à 6, on injecte de préférence le béton au moyen d'un tube plongeur introduit dans la banche par une ouverture supérieure (Figure 2).

### EXEMPLE 7

On réalise une pièce de construction en angle droit ayant 2,7 m de haut, 1,25 m de côtés et 18 cm d'épaisseur.

Le béton autonivelant a la formule suivante:
- ciment CEM I: 270 kg/m³,
- eau: 216 kg/m³,
- cendres volantes: 210 kg/m³,
- granulats 0/1: 366 kg/m³
- granulats 0/5: 366 kg/m³,
- granulats 5/12: 807 kg/m³,
- superplastifiant: 4,05 kg/m³,
- agent entraîneur d'air 0,27 kg/m³.

Le superplastifiant est le composé de formule (Il).

On introduit l'ensemble du superplastifiant à la centrale La durée de transport du béton autonivelant vaut environ 3 heures. à la suite desquelles on observe un bon maintien de rhéologie. La pompe employée est préférentiellement une pompe donnant un flux continu d'injection.

Lors d'un essai d'affaissement effectué sur chantier, on observe un étalement égal à 68 cm au bout de 30 minutes et à 70 cm au bout de 60 minutes.

Le parement obtenu après durcissement du béton comporte huit bulles de taille supérieure à 2 mm, la plus grosse bulle mesurant 5 mm. Les propriétés obtenues sont donc tout à fait satisfaisantes.

### EXEMPLE 8

Dans cet exemple, la pièce de construction réalisée et la mise en oeuvre sont similaires à celles de l'exemple 7. La formule du béton autonivelant diffère de celle de l'exemple 7 par la quantité de superplastifiant, égale à 5,4 kg/m³, et par la présence d'un agent viscosant constitué par de la gomme Welan à raison de 0,05 kg/m³.

Lors de l'essai d'affaissement, on observe un étalement de 68 cm au bout de 30 secondes et de 75 cm au bout de 60 secondes.

Le parement obtenu après durcissement du béton est d'excellente qualité. En effet, la plus grande taille de bulles présentes sur ce parement est de 2 mm.

### EXEMPLE 9

Dans cet exemple, la pièce de construction réalisée est un voile en béton similaire à l'exemple 7 avec la formule de béton suivante:
- Ciment CEMI 300 kg/m³
- Eau 225 kg/m³
- Cendres volantes 190 kg/m³
- Granulats 0/1 180 kg/m³
- Granulats 0/5 600 kg/m³
- Granulats 3/8 725 kg/m³
- Superplastifiant 4,6 kg/m³

Le superplastifiant utilisé est le composé de formule (Il).

### EXEMPLE 10

On réalise un exemple similaire à l'exemple 9 précédent à partir de la même composition de béton où l'on a substitué 50% de superplastifiant II en poids par un superplastifiant sous forme de prémélange de formulation suivante:
- Superplastifiant II 14%
- Tributilphosphate 2,25%
- Amine grasse oxyéthylénée NORAMOX 022 de CECA 2,25%
- Sepiolite 1,2%
- PCP 18792 de BOZETTO 50% (à 30% en sec)
- Diéthanolamine 5,6% (à 30% en sec)
- Epaississant « Tylose 60 000 YP4 de HOECHST 2,25%
- Eau 28,62%

On obtient une fluidité excellente avec un essai d'affaissement avec un étalement de 70 cm au bout de 30 minutes et de 61 cm au bout de 150 minutes. La densité de béton obtenue est de 2,28.

L'aspect du parement est excellent. Aucun ressuage n'est constaté.

## Revendications

1. Béton autonivelant de composition contenant, en poids , par mètre cube de béton:
- 350 à 600 kg/m³ environ de liant, dont 200 à 500 kg/m³ de ciment,
- 170 à 250 kg/m³ environ d'eau,
- 0,5 à 4 kg/m³ environ (extraits secs) d'agents et adjuvants divers, comprenant au moins un superplastifiant,
- le complément au mètre cube, en poids, de granulats et particules solides de granulométrie inférieure ou égale à 12 mm, préférentiellement inférieure ou égale à 8 mm,
caractérisé en ce que le superplastifiant est un composé (I) ou sel du composé (I), ledit composé (I) répondant à la formule 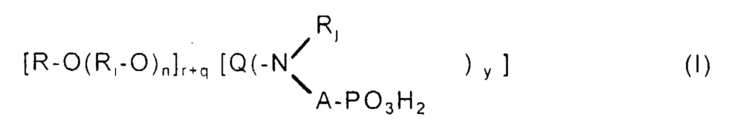 dans laquelle:
. R est un atome d'hydrogène ou un groupe hydrocarboné monovalent, saturé ou non, comportant de 1 à 18 atomes de carbone et éventuellement un ou plusieurs hétéroatomes; R étant de préférence un atome d'hydrogène ou un groupe hydrocarboné monovalent, saturé ou non. comportant de 1 à 4 atomes de carbone, 50% à 100% des Rᵢ sont l'éthylène, 0 à 50% des éventuels autres Rᵢ sont semblables ou différents entre eux et représentent un alkylène comme l'éthylène, le propylène, le butylène, l'amylène, l'octylène ou le cyclohexène, ou un arylène comme le styrène ou le méthylstyrène; les Rᵢ renfermant éventuellement un ou plusieurs hétéroatomes,
. Q est un groupe hydrocarboné comportant de 2 à 18 atomes de carbone et éventuellement un ou plusieurs hétéroatomes,
. A est un groupe alkylidène comportant de 1 à 3 atomes de carbone, A représentant de préférence le groupe méthylène,
. les Rⱼ sont semblables ou différents entre eux et peuvent être choisis parmi:
* le groupe A-PO₃H₂, A ayant la signification précitée,
* et le groupe 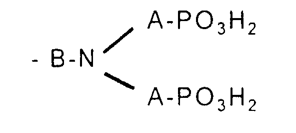
- B désignant un groupement alkylène comportant de 2 à 8 atomes de carbone, B représentant de préférence l'éthylène ou le propylène, A ayant la signification précitée,
. « n » est un nombre compris entre 20 et 250,
. « r » est le nombre des groupes [R-O(Rᵢ-O)ₙ] portés par l'ensemble des Rⱼ,
. « q » est le nombre des groupes [R-O(Rᵢ-O)ₙ] portés par Q,
. la somme « r+q » est au plus égale à 3,
. « y » est un nombre entier égal à 1 ou 2,
. Q, N et les Rⱼ peuvent former ensemble un ou plusieurs cycles, ce ou ces cycles pouvant en outre contenir un ou plusieurs autres hétéro-atomes.

2. Béton autonivelant selon la revendication 1, caractérisé en ce que R est un atome d'hydrogène.

3. Béton autonivelant selon la revendication 1, caractérisé en ce que R est un groupe hydrocarboné monovalent, saturé ou non, comportant de 1 à 4 atomes de carbone.

4. Béton autonivelant selon l'une des revendications 1 à 3, caractérisé en ce que Rᵢ est majoritairement l'éthylène, le nombre de motifs d'éthylène correspondant à Rᵢ étant suffisant pour conserver le caractère hydrosoluble ou hydrodispersable des composés (I).

5. Béton autonivelant selon l'une quelconque des revendications 1 à 4, caractérisé en ce que Q est un groupe hydrocarboné comportant de 2 à 12, et préférentiellement de 2 à 6 atomes de carbone, et représente avantageusement l'éthylène et/ou le propylène, ceux-ci étant avantageusement présents à raison de 95% en moles, le complément étant constitué d'autres monomères, tels le cyclohexène ou le n-hexène.

6. Béton autonivelant selon l'une quelconque des revendications 1 à 5, caractérisé en ce que A est le groupe méthylène.

7. Béton autonivelant selon l'une quelconque des revendications 1 à 6, caractérisé en ce que le groupe Rⱼ est le groupe -CH₂-PO₃H₂, éventuellement salifié, ou le groupe-C₂H₄N(CH₂-PO₃H₂)₂, éventuellement salifié, ou le groupe-C₃H₆N(CH₂-PO₃H₂)₂ éventuellement salifié.

8. Béton autonivelant selon l'une quelconque des revendications 1 à 7, caractérisé en ce que les sels sont des sels de sodium, de calcium ou de diéthanolamine.

9. Béton autonivelant selon l'une quelconque des revendications 1 à 8, caractérisé en ce que « n » est compris entre 20 et 250, de préférence entre 30 et 150 et encore mieux entre 50 et 100.

10. Béton autonivelant selon l'une quelconque des revendications 1 à 9, caractérisé en ce que la somme « r+q » est inférieure à 3, et préférentiellement égale à 1.

11. Béton autonivelant selon l'une quelconque des revendications 1 à 10, caractérisé en ce qu'au moins 50% des R₁ sont l'éthylène et les éventuelles autres R₁ sont le propylène.

12. Béton autonivelant selon l'une quelconque des revendications 1 à 11, caractérisé en ce que dans le composé (I) diphosphoné, Rᵢ est l'éthylène, Rⱼ est -CH₂-PO₃H₂, « n » est compris entre 30 et 150 (bornes incluses), de préférence entre 50 et 100 (bornes incluses), la somme « r+q » est égale à 1 et « y » est égal à 1.

13. Béton autonivelant selon l'une quelconque des revendications 1 à 12, caractérisé en ce que le superplastifiant est le composé de formule (II) 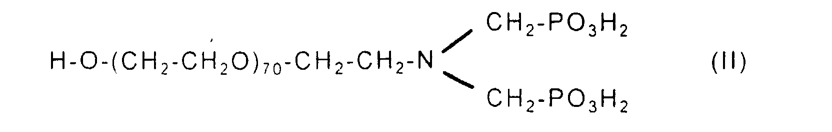 ou ses sels.

14. Béton autonivelant selon l'une quelconque des revendications 1 à 13, caractérisé en ce que la quantité du superplastifiant (I) comportant au moins un groupement amino-di (alkylènephosphonique) et au moins une chaîne polyoxyalkylée, dans la composition autonivelante, est comprise entre 0.2 et 2% en poids en sec, rapporté au poids de ciment, de préférence entre 0,3 et 0,8% en poids en sec.

15. Béton autonivelant selon l'une quelconque des revendications 1 à 14, caractérisé en ce qu'il comprend, en plus du superplastifiant répondant à la formule (I), au moins un superplastifiant (PCP), hydrosoluble ou hydrodispersable, de type acide polycarboxylique et renfermant des chaînes polyéthers.

16. Béton autonivelant selon la revendication 15, caractérisé en ce que les superplastifiants additionnels PCP sont à base de monomères vinyliques carboxyliques et éventuellement de monomères sulfonés.

17. Béton autonivelant selon l'une des revendications 15 ou 16. caractérisé en ce que le superplastifiant additionnel PCP renferme des chaînes polyéthers de différentes longueurs, et en particulier est tel que les chaînes polyéthers renferment, en moyenne, au moins 50% d'unités oxyéthylènes (pourcentage exprimé sur le total des motifs oxyalkylènes du superplastifiant PCP), les autres motifs oxyalkylènes étant de préférence des motifs oxypropylènes.

18. Béton autonivelant selon l'une quelconque des revendications 1 à 17, caractérisé en ce que le rapport en poids du superplastifiant (I) sur le superplastifiant (PCP) va de 0,1 à 10.

19. Béton autonivelant selon l'une quelconque des revendications 1 à 18, caractérisé en ce qu'il comprend au moins un agent antimousse, en proportion en général comprise entre 0,01 et 0,3% en poids, rapporté au poids de ciment.

20. Béton autonivelant selon l'une quelconque des revendications 1 à 19, caractérisé en ce qu'il comprend au moins un agent épaississant, par exemple des composés minéraux tels que la sépiolite ou des silices ultrafines, ou des composés organiques, tels que des dérivés de la cellulose ou des polysaccharides de poids moléculaire élevé, comme des gommes de xanthane, ou des mélanges de deux ou plusieurs des agents épaississants précités, la quantité d'agent épaississant étant en général comprise entre 0,005% et 0,05% en poids en sec rapporté au poids de ciment.

21. Béton autonivelant selon l'une quelconque des revendications 1 à 20, caractérisé en ce que le complément au ciment pour constituer le liant est constitué de laitier de haut-fourneau moulu, de cendres volantes, de filler, calcaire ou siliceux, ou d'autres éléments pouzzolaniques.

22. Procédé de fabrication d'une pièce de construction verticale par injection d'un béton autonivelant selon l'une quelconque des revendications 1 à 21 dans un coffrage (1, 11), procédé dans lequel on effectue un pompage dudit béton sous forme fluide au moyen d'au moins un tube plongeur (2, 12) ayant une extrémité d'injection (5, 15) à un niveau inférieur dudit coffrage (1, 11).

23. Procédé de fabrication selon la revendication 22, caractérisé en ce que ledit tube plongeur (2, 12) a un diamètre compris entre 45 mm et 65 mm, avantageusement égal à 50 mm.

24. Procédé de fabrication selon l'une des revendications 22 ou 23, caractérisé en ce qu'on introduit le tube plongeur (2, 12) dans le coffrage (11) par une ouverture supérieure (16) du coffrage (11).

25. Procédé de fabrication d'une pièce de construction selon l'une des revendications 22 ou 23, caractérisé en ce que ledit tube plongeur (2) traverse ledit coffrage (1) au niveau inférieur du coffrage (1).

26. Procédé de fabrication d'une pièce de construction horizontale par injection d'un béton autonivelant selon l'une quelconque des revendications 1 à 21 dans un coffrage plan (21) ou sur un sol, procédé dans lequel, après injection, on presse régulièrement une barre de lissage à la surface du béton afin d'assurer une bonne planéité de la pièce.

27. Procédé de préparation d'une composition de béton autonivelant selon l'une quelconque des revendications 1 à 21, caractérisé en ce qu'on réalise un prémélange contenant le superplastifiant et les agents antimousse et/ou épaississant, si ceux-ci sont présents.

28. Procédé selon la revendication 27, caractérisé en ce que le prémélange renferme:
- de l'eau,
- au moins un agent antimousse non hydrosoluble ou faiblement hydrosoluble;
- au moins un superplastifiant (I) répondant à la formule (I) et, éventuellement, un autre superplastifiant (PCP). hydrosoluble ou hydrodispersable.
- au moins un composé organique (O) contenant:
• au moins une fonction amine primaire. secondaire ou tertiaire, éventuellement partiellement ou totalement neutralisée par un acide de Brönsted, organique ou minéral; et
• au moins une chaîne alkyle ou alkyl-aryle. linéaire ou ramifiée, saturée ou insaturée, comprenant au moins 8 atomes de carbone, et éventuellement des hétéroatomes, choisi parmi l'oxygène, le soufre ou l'azote;
- au moins un stabilisant minéral quand le pH dudit prémélange est supérieur à 7, tel que des argiles et les sépiolites;
- éventuellement, un acide ou une base pour ajuster le pH dudit mélange.

29. Procédé selon la revendication 28, caractérisé en ce que l'agent antimousse est un antimousse faiblement ou non soluble dans les milieux aqueux à température ambiante (environ 20°C) et à la pression atmosphérique.

30. Procédé selon l'une des revendications 28 ou 29, caractérisé en ce que le composé organique (O) est choisi parmi l'amine oléique, l'amine de coprah, l'amine de suif et les dérivés de ces amines, en particulier les dérivés de ces amines. avec un motif d'oxéthylène ou une chaîne contenant au maximum 8 motifs d'oxyéthylènes.

31. Procédé selon l'une quelconque des revendications 27 à 30, caractérisé en ce qu'on réalise un mélange uniforme, à savoir un mélange qui, laissé au repos, peut aller d'un mélange limpide (comme une microémulsion) à un mélange trouble (comme une émulsion huile dans eau).

## Claims

1. A self-levelling concrete of composition, comprising in weight, for cubic metre of concrete:
- about 350 to 600 kg/m³ of binder, of which 200 to 500 kg/m³ are cement,
- about 170 to 250 kg/m³ of water,
- about 0.5 to 4 kg/m³ of various agents and additives (dry extracts), comprising at least one superplasticizer,
- the cubic metre supplement, in weight, of granulates and solid particles of size smaller than or equal to 12 mm, preferably smaller than or equal to 8 mm;
characterized in that the superplasticizer is a compound (I) or a salt of said compound (I), wherein this compound (I) has the formula: 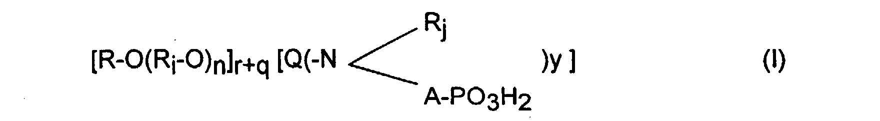 in which:
- R is a hydrogen atom or a satured or unsatured monovalent hydrocarbon group, comprising 1 to 18 carbon atoms and optionally one or several heteroatoms: R being preferably a hydrogen atom or a monovalent saturated or unsaturated hydrocarbon group, comprising 1 to 4 carbon atoms, 50 to 100% of the Rᵢ are ethylene, 0 to 50% of the optional other Rᵢ are similar or different from one another and represent an alkylene such as ethylene, propylene, butylene, amylene, octylene or cyclohexene, or an arylene such as styrene or methylstyrene; whereby the Rᵢ may include one or several heteroatoms,
- Q is a hydrocarbon group comprising 2 to 18 carbon atoms and optionally one or several heteroatoms.
- A is an alkylidene group comprising 1 to 3 carbon atoms, A representing preferably the methylene group,
- The Rⱼ are similar or different from another and can be selected from
* the A-PO₃H₂ group, whereas A has the meaning mentioned above,
* and the group 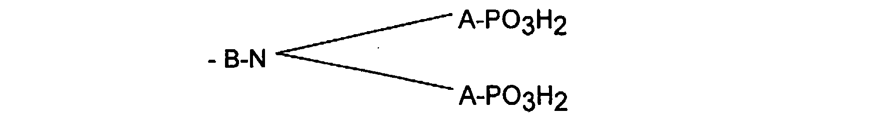
- B designating an alkylene group comprising 2 to 8 carbon atoms, B representing preferably ethylene or propylene, A having the above mentioned meaning,
- n is a number ranging from 20 and 250,
- r is the number of [R-O(Rᵢ-O)ₙ] groups of Rⱼ,
- q is the number of [R-O(Rᵢ-O)ₙ] groups of Q,
- the sum r+q should not exceed 3,
- y is an integer equal to 1 or 2,
- Q, N and the Rⱼ may form together one or several rings, whereas this or these rings may also comprise one or several other heteroatoms.

2. A self-levelling concrete according to claim 1, characterized in that R is a hydrogen atom.

3. A self-levelling concrete according to claim 1, characterized in that R is a monovalent saturated or unsaturated hydrocarbon group comprising 1 to 4 carbon atoms.

4. A self-levelling concrete according to one of claims 1 to 3, characterized in that Rᵢ is mainly ethylene, whereas the number of ethylene units corresponding to Rᵢ is sufficient in order to keep the hydrosoluble or hydrodispersible property of the compounds (I).

5. A self-levelling concrete according to any one of claims 1 to 4, characterized in that Q is a hydrocarbon group comprising 2 to 12, preferably 2 to 6 carbon atoms and represents advantageously ethylene and/or propylene, whereas the latter are provided advantageously in an amount of 95 mole %, the supplement consisting of other monomers, such as cyclohexene or n-hexene.

6. A self-levelling concrete according to any one of claims 1 to 5, characterized in that A is the methylene group.

7. A self-levelling concrete according to any one of claims 1 to 6, characterized in that the Rⱼ group is the group -CH₂-PO₃H₂ optionally as a salt or the group -C₂H₄N (CH₂-PO₃H₂)₂ optionally as a salt or the group -C₃H₆N (CH₂-PO₃H₂)₂ optionally as a salt.

8. A self-levelling concrete according to any one of claims 1 to 7, characterized in that the salts are sodium, calcium or diethanolamine salts.

9. A self-levelling concrete according to any one of claims 1 to 8, characterized in that n ranges from 20 to 250, preferably from 30 to 150 and more preferably from 50 to 100.

10. A self-levelling concrete according to any one of claims 1 to 9, characterized in that the sum r+q is smaller than 3 and preferably equal to 1.

11. A self-levelling concrete according to any one of claims 1 to 10, characterized in that at least 50% of Rᵢ are ethylene and the other optional Rᵢ are propylene.

12. A self-levelling concrete according to any one of claims 1 to 11, characterized in that, in the diphosphonated compound (I), Rᵢ is ethylene, Rⱼ is -CH₂-PO₃H₂. n ranges from 30 to 150 (inclusive), preferably from 50 to 100 (inclusive), the sum r+q is equal to 1 and y is equal to 1.

13. A self-levelling concrete according to any one of claims 1 to 12, characterized in that the superplasticizer is the compound of the following formula (II): 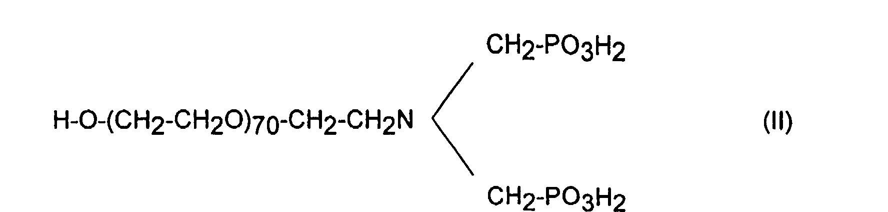 or the salts thereof.

14. A self-levelling concrete according to any one of claims 1 to 13, characterized in that the amount of the superplasticizer (I) comprising at least one amino-di-(alkylene phosphonic) group and at least one polyalkylated chain, in the self-levelling composition, ranges from 0.2 and 2% in dry weight, based on the cement weight, preferably from 0.3 to 0.8% in dry weight.

15. A self-levelling concrete according to any one of claims 1 to 14, characterized in that it comprises further to the superplasticizer (I) of the above mentioned formula (I), at least one hydrosoluble or hydrodispersible superplasticizer (PCP), of polycarboxylic acid type and comprising polyether chains.

16. A self-levelling concrete according to claim 15, characterized in that the additional superplasticizers (PCP) are based on carboxylic vinyl monomers, and optionally, on sulfonated monomers.

17. A self-levelling concrete according to one of claims 15 or 16, characterized in that the additional superplasticizer (PCP) comprises polyether chains of various lengths, and in particular is such that the polyether chains comprise, in average, at least 50% of oxyethylene units (percentage based on the total of oxyalkylene units of the superplasticizer (PCP)), the other oxyalkylene units being preferably oxypropylene units.

18. A self-levelling concrete according to any one of claims 1 to 17, characterized in that the weight ratio of the superplasticizer (I) to the superplasticizer (PCP) ranges from 0.1 to 10.

19. A self-levelling concrete according to any one of claims 1 to 18, characterized in that it comprises at least one antifoaming agent, in amount generally ranging between 0.01 and 0.3% in weight, based on the cement weight.

20. A self-levelling concrete according to any one of claims 1 to 19, characterized in that it comprises at least one thickener, for instance mineral compounds such as sepiolite or ultrathin silicae, or organic compounds, such as cellulose derivatives or polysaccharides with high molecular weight, such as Xanthan gum or mixtures of two or more above mentioned thickeners, whereby the amount of thickener ranges generally from 0.005 to 0.05% in dry weight based on the cement weight.

21. A self-levelling concrete according to any one of claims 1 to 20, characterized in that the supplement to cement to make up the binder advantageously consists of ground high furnace slag, volatile ashes, filler, calcareous or siliceous or other puzzolanic elements.

22. A method for making a vertical structural part by injecting a self-levelling concrete according to any one of claims 1 to 21 into a framework (1, 11), a method in which the concrete is pumped in fluid form using at least one immersion tube (2, 12) with an injection end (5, 15) at a lower level than the said framework (1, 11).

23. A making method according to claim 22, characterized in that the diameter of the immersion tube (2, 12) ranges from 45 to 65 mm, and is preferably equal to 50 mm.

24. A making method according to one of claims 22 or 23, characterized in that the immersion tube (2, 12) is inserted into the framework (11) through an upper opening (16) in the framework (11).

25. A method for making a structural part according to one of claims 22 or 23, characterized in that the said immersion tube (2) goes through the said framework (1) at the lower level of the framework (1).

26. A method for making a horizontal structural part by injecting a self-levelling concrete according to any one of claims 1 to 21 into a plane framework (21), or on a particular ground, a method in which, after injection, a smoothing bar is applied regularly over the surface of the concrete in order to ensure surface evenness of the part.

27. A method for preparing a composition of a self-levelling concrete according to any one of claims 1 to 21, characterized in that a premixture is made containing the superplasticizer and the antifoaming and/or thickening agents, if the latter are present.

28. A method according to claim 27, characterized in that the premixture comprises:
- water,
- at least one antifoaming agent, not hydrosoluble or hardly hydrosoluble,
- at least one superplasticizer (I) complying with the formula (I) and, optionally, another superplasticizer (PCP) hydrosoluble or hydrodispersible,
- at least one organic compound (O) comprising :
• at least one primary, secondary or tertiary amino group, optionally neutralised, in whole or in part, by an organic or mineral Brönsted acid; and
• at least one alkyl or alkyl-aryl chain, linear or branched, saturated or unsaturated, comprising at least 8 carbon atoms, and optionally heteroatoms, selected from oxygen, sulphur or nitrogen;
- at least one mineral stabiliser when the pH-acidity of the said premixture is greater than 7, such as clays and sepiolites,
- optionally, an acid or a base to adjust the pH of the said mixture.

29. A method according to claim 28, characterized in that the antifoaming agent is an antifoaming agent, weakly or not soluble in aqueous media at room temperature (about 20°C) and at atmospheric pressure.

30. A method according to one of claims 28 or 29, characterized in that the organic compound (O) is selected from oleic amine, coconut oil amine, tallow amine and the derivatives of these amines, in particular the derivatives of these amines with an oxyethylene unit or a chain containing no more than 8 oxyethylene units.

31. A method according to any one of claims 27 to 30, characterized in that a uniform mixture is made, i.e. a mixture which, left to set, may range from a limpid mixture (such as a microemulsion) to a troubled mixture (such as an oil in water emulsion).

## Patentansprüche

1. Autonivellierender Beton mit einer Zusammensetzung, die, bezogen auf das Gewicht, pro m³ Beton enthält:
- etwa 350 bis 600 kg/m³ Bindemittel, davon 200 bis 500 kg/m³ Zement,
- etwa 170 bis 250 kg/m³ Wasser,
- etwa 0,5 bis 4 kg/m³ (Trockenmasse) diverse Mittel und Hilfsmittel, umfassend mindestens ein Super-Plastifizierungsmittel,
- zur Vervollständigung des Kubikmeters, bezogen auf das Gewicht, feste Zuschläge und Teilchen mit einer Korngröße kleiner gleich oder gleich 12 mm, vorzugsweise kleiner als oder gleich 8 mm,
dadurch gekennzeichnet, dass es sich bei dem Super-Plastifizierungsmittel um eine Verbindung (I) oder ein Salz von Verbindung (I) handelt, wobei die Verbindung (I) der Formel 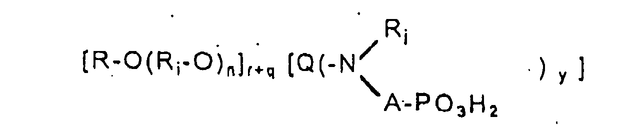 entspricht, worin:
R ein Wasserstoffatom oder eine gesättigte oder ungesättigte einwertige Kohlenwasserstoffgruppe ist, die 1 bis 18 Kohlenstoffatome und gegebenenfalls ein oder mehrere Heteroatome umfasst, wobei R vorzugsweise ein Wasserstoffatom oder eine gesättigte oder ungesättigte einwertige, 1 bis 4 Kohlenstoffatome umfassende Kohlenwasserstoffgruppe ist, 50 bis 100 % von Rᵢ Ethylen sind, 0 bis 50 % der eventuellen anderen Rᵢ gleich oder verschieden sind und ein Alkylen wie Ethylen, Propylen, Butylen, Penten, Octylen oder Cyclohexen oder ein Arylen wie Styrol oder Methylstyrol darstellen, wobei die Rᵢ gegebenenfalls ein oder mehrere Heteroatome enthalten,
Q eine Kohlenwasserstoffgruppe ist, die 2 bis 18 Kohlenstoffatome und gegebenenfalls ein oder mehrere Heteroatome umfasst,
A eine Alkylidengruppe ist, die 1 bis 3 Kohlenstoffatome umfasst, wobei A vorzugsweise eine Methylengruppe darstellt,
die Rⱼ gleich oder verschieden sind und ausgewählt sein können aus:
* der Gruppe A-PO₃H₂, wobei A die zuvor aufgeführte Bedeutung hat,
* und der Gruppe 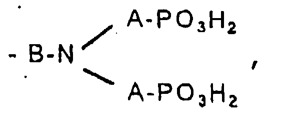
wobei B eine Alkylengruppe bezeichnet, die 2 bis 8 Kohlenstoffatome umfasst, wobei B vorzugsweise Ethylen oder Propylen darstellt und A die zuvor aufgeführte Bedeutung hat,
"n" eine Zahl zwischen 20 und 250 ist,
"r" die Zahl der an der Gesamtzahl der Rⱼ gebundenen Gruppen [R-O(Rᵢ-O)ₙ] ist
"q" die Zahl der an Q gebundenen Gruppen [R-O(R₁-O)ₙ] ist,
wobei die Summe "r + q" höchstens gleich 3 ist,
"y" eine ganze Zahl gleich 1 oder 2 ist,
Q, N und die Rⱼ zusammen einen oder mehrere Ringe bilden können, wobei dieser Ring oder diese Ringe außerdem ein oder mehrere weitere Heteroatome enthalten kann bzw. können.

2. Autonivellierender Beton nach Anspruch 1, dadurch gekennzeichnet, dass R ein Wasserstoffatom ist.

3. Autonivellierender Beton nach Anspruch 1, dadurch gekennzeichnet, dass R eine gesättigte oder ungesättigte einwertige Kohlenwasserstoffgruppe ist, die 1 bis 4 Kohlenstoffatome umfasst.

4. Autonivellierender Beton nach Anspruch 1 bis 3, dadurch gekennzeichnet, dass R überwiegend Ethylen ist, wobei die Zahl der R₁ entsprechenden Ethyleneinheiten ausreichend ist, um die wasserlösliche oder wasserdispergierbare Beschaffenheit der Verbindungen (I) zu erhalten.

5. Autonivellierender Beton nach einem der Ansprüche 1 bis 4, dadurch gekennzeichnet, dass Q eine 2 bis 12 und vorzugsweise 2 bis 6 Kohlenstoffatome umfassende Kohlenwasserstoffgruppe ist und vorzugsweise Ethylen und/oder Propylen darstellt, die vorzugsweise in einer Menge von 95 % mol-% vorliegen, wobei der Rest aus anderen Monomeren wie Cyclohexen oder n-Hexen besteht.

6. Autonivellierender Beton nach einem der Ansprüche 1 bis 5, dadurch gekennzeichnet, dass A eine Methylengruppe ist.

7. Autonivellierender Beton nach einem der Ansprüche 1 bis 6, dadurch gekennzeichnet, dass die Gruppe Rⱼ die gegebenenfalls als Salz vorliegende Gruppe -CH₂-PO₃H₂ oder die gegebenenfalls als Salz vorliegende Gruppe C₂H₄N(CH₂-PO₃H₂)₂ oder die gegebenenfalls als Salz vorliegende Gruppe C₃H₆N(CH₂-PO₃H₂)₂ ist.

8. Autonivellierender Beton nach einem der Ansprüche 1 bis 7, dadurch gekennzeichnet, dass es sich bei den Salzen um Natrium-, Calcium- oder Diethanolaminsalze handelt.

9. Autonivellierender Beton nach einem der Ansprüche 1 bis 8, dadurch gekennzeichnet, dass "n" zwischen 20 und 250, vorzugsweise zwischen 30 und 150 und noch mehr bevorzugt zwischen 50 und 100 liegt.

10. Autonivellierender Beton nach einem der Ansprüche 1 bis 9, dadurch gekennzeichnet, dass die Summe "r + q" kleiner als 3 und vorzugsweise gleich 1 ist.

11. Autonivellierender Beton nach einem der Ansprüche 1 bis 10, dadurch gekennzeichnet, dass mindestens 50 % der Rᵢ Ethylen und die eventuellen anderen Rᵢ Propylen sind.

12. Autonivellierender Beton nach einem der Ansprüche 1 bis 11, dadurch gekennzeichnet, dass in der diphosphonierten Verbindung (I) Rᵢ Ethylen ist, Rⱼ -CH₂-PO₃H₂ ist, "n" zwischen 30 und 150 (Grenzwerte eingeschlossen), vorzugsweise zwischen 50 und 100 (Grenzwerte eingeschlossen) liegt, die Summe "r + q" gleich 1 ist und "y" gleich 1 ist.

13. Autonivellierender Beton nach einem der Ansprüche 1 bis 12, dadurch gekennzeichnet, dass es sich bei dem Super-Plastifizierungsmittel um die Verbindung der Formel (II) 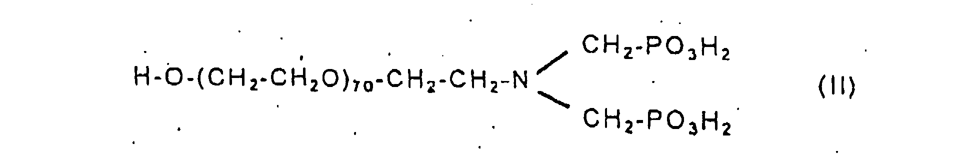 oder Salze davon handelt.

14. Autonivellierender Beton nach einem der Ansprüche 1 bis 13, dadurch gekennzeichnet, dass die Menge des Super-Plastifizierungsmittels (I) mindestens eine Aminodi(alkylenphosphon)-Gruppe und mindestens eine polyoxyalkylierte Kette umfasst und zwischen 0,2 und 2 % der Trockenmasse, bezogen auf das Gewicht des Zements, vorzugsweise zwischen 0,3 und 0,8 % der Trockenmasse liegt.

15. Autonivellierender Beton nach einem der Ansprüche 1 bis 14, dadurch gekennzeichnet, dass er zusätzlich zum Super-Plastifizierungsmittel der Formel (I) mindestens ein wasserlösliches oder wasserdispergierbares Super-Plastifizierungsmittel (PCP) enthält, das vom Polycarbonsäuretyp ist und Polyetherketten enthält.

16. Autonivellierender Beton nach Anspruch 15, dadurch gekennzeichnet, dass die zusätzlichen PCP-Super-Plastifizierungsmittel auf der Grundlage von Vinylcarboxyl-Monomeren und gegebenenfalls sulfonierten Monomeren vorliegen.

17. Autonivellierender Beton nach einem der Ansprüche 15 oder 16, dadurch gekennzeichnet, dass das zusätzliche PCP-Super-Plastifizierungsmittel Polyetherketten mit verschiedenen Längen umfasst und dass insbesondere die Polyetherketten durchschnittlich mindestens 50 % Oxyethylen-Einheiten enthalten (wobei die Prozentzahl sich auf die Gesamtmenge der Oxyalkylen-Einheiten des PCP-Super-Plastifizierungsmittels bezieht) und die anderen Oxyalkylen-Einheiten vorzugsweise Oxypropylen-Einheiten sind.

18. Autonivellierender Beton nach einem der Ansprüche 1 bis 17, dadurch gekennzeichnet, dass das Gewichtsverhältnis des Super-Plastifizierungsmittels (I) zum Super-Plastifizierungsmittel (PCP) von 0,1 bis 10 reicht.

19. Autonivellierender Beton nach einem der Ansprüche 1 bis 18, dadurch gekennzeichnet, dass es mindestens ein Antischaummittel in einem Anteil umfasst, der im allgemeinen zwischen 0,01 und 0,3 Gew.-%, bezogen auf das Gewicht des Zements, beträgt.

20. Autonivellierender Beton nach einem der Ansprüche 1 bis 19, dadurch gekennzeichnet, dass er mindestens ein Verdickungsmittel, zum Beispiel mineralische Verbindungen, wie Sepiolith oder ultrafeine Kieselerden, oder organische Verbindungen, wie Cellulosederivate oder Polysaccharide mit hohen Molmassen, wie Xanthan-Gummen, oder Mischungen der beiden oder mehrere der zuvor aufgeführten Verdickungsmittel umfasst, wobei die Menge des Verdickungsmittels im allgemeinen zwischen 0,005 % und 0,05 % der Trockenmasse, bezogen auf das Gewicht des Zements, beträgt.

21. Autonivellierender Beton nach einem der Ansprüche 1 bis 20, dadurch gekennzeichnet, dass der Zusatz zum Zement, um das Bindemittel darzustellen, aus gegossener Hochofenschlacke, Flugaschen, kalk- oder kieselsäurehaltigen Füllmitteln oder anderen Puzzolanbestandteilen besteht.

22. Verfahren zur Herstellung eines vertikalen Bauteils durch Injektion eines autonivellierenden Betons nach einem der Ansprüche 1 bis 21 in eine Schalung (1, 11), wobei in dem Verfahren ein Pumpen des Betons in flüssiger Form mittels eines Tauchrohrs (2, 12) mit einem Injektionsende (5, 15) auf einem tiefer gelegenen Niveau der Schalung (1, 11) bewirkt wird.

23. Herstellungsverfahren nach Anspruch 22, dadurch gekennzeichnet, dass das Tauchrohr (2, 12) einen Durchmesser zwischen 45 mm und 65 mm, vorteilhaft gleich 50 mm, aufweist.

24. Herstellungsverfahren nach einem der Ansprüche 22 oder 23, dadurch gekennzeichnet, dass das Tauchrohr (2, 12) durch eine obere Öffnung (16) der Schalung (11) in die Schalung (11) eingeführt wird.

25. Verfahren zur Herstellung eines Bauteils nach einem der Ansprüche 22 oder 23, dadurch gekennzeichnet, dass das Tauchrohr (2) die Schalung (1) auf einem tiefer gelegenen Niveau der Schalung (1) durchquert.

26. Verfahren zur Herstellung eines vertikalen Bauteils durch Injektion eines autonivellierenden Betons nach einem der Ansprüche 1 bis 21 in einer ebenen Schalung (21) oder auf einem Boden, wobei in dem Verfahren nach der Injektion eine Glättschiene gleichmäßig auf die Oberfläche des Betons gepresst wird, damit eine gute Ebenheit des Stücks gewährleistet ist.

27. Verfahren zur Herstellung einer autonivellierenden Betonzusammensetzung nach einem der Ansprüche 1 bis 21, dadurch gekennzeichnet, dass eine Vormischung angefertigt wird, die das Super-Plastifizierungsmittel und das Antischaum- und/oder das Verdickungsmittel enthält, sofern diese vorhanden sind.

28. Verfahren nach Anspruch 27, dadurch gekennzeichnet, dass die Vormischung enthält:
Wasser,
mindestens ein nicht wasserlösliches oder leicht wasserlösliches Antischaummittel,
mindestens ein Super-Plastifizierungsmittel (I) der Formel (I) und gegebenenfalls ein weiteres wasserlösliches oder wasserdispergierbares Super-Plastifizierungsmittel (PCP),
mindestens eine organische Verbindung (O), umfassend:
• mindestens eine primäre, sekundäre oder tertiäre Aminfunktion, die gegebenenfalls teilweise oder komplett durch eine organische oder mineralische Brönsted-Säure neutralisiert ist, und
• mindestens eine lineare oder verzweigte, gesättigte oder ungesättigte Alkyl- oder Alkylarylkette, die mindestens 8 Kohlenstoffatome und gegebenenfalls aus Sauerstoff, Schwefel oder Stickstoff ausgewählte Heteroatome umfasst,
mindestens ein mineralisches Stabilisierungsmittel, wenn der pH-Wert der Vormischung höher als 7 ist, wie Tone und Sepiolithe,
gegebenenfalls eine Säure oder eine Base zur Einstellung des pH-Werts der Mischung.

29. Verfahren nach Anspruch 28, dadurch gekennzeichnet, dass es sich bei dem Antischaummittel um ein Antischaummittel handelt, das bei Umgebungstemperatur (etwa 20 °C) und unter Atmosphärendruck in wässrigen Milieus schwach oder nicht löslich ist.

30. Verfahren nach einem der Ansprüche 28 oder 29, dadurch gekennzeichnet, dass die organische Zusammensetzung (O) aus Oleinamin, Kopraamin, Talgamin und Derivaten dieser Amine, insbesondere den Derivaten dieser Amine mit einer Oxyethylen-Einheit oder einer mindestens 8 Oxyethylen-Einheiten enthaltenden Kette ausgewählt ist.

31. Verfahren nach einem der Ansprüche 27 bis 30, dadurch gekennzeichnet, dass eine gleichmäßige Mischung, nämlich eine Mischung, die, wenn sie in Ruhe gelassen wird, von einer klaren Mischung (wie einer Mikroemulsion) in eine trübe Mischung (wie eine Öl-in-Wasser-Emulsion) übergeht, hergestellt wird.
